# FASCICULE DE BREVET EUROPEEN

(11) **EP 3 577 859 B1**
(45) Date de publication et mention de la délivrance du brevet: **27.07.2022**
(21) Numéro de dépôt: 18701770.2
(22) Date de dépôt: 01.02.2018
(51) Int. Cl.: H04L 12/28

(54) **PROCÉDÉ DE SUIVI D'UN PARC DE BARRIQUES ET APPAREIL ASSOCIÉ**
VERFAHREN ZUR ÜBERWACHUNG EINER SAMMLUNG VON FÄSSERN UND ZUGEHÖRIGE VORRICHTUNG
METHOD FOR MONITORING A COLLECTION OF BARRELS AND ASSOCIATED APPARATUS

(30) Priorité: 01.02.2017 FR 1750843
(43) Date de publication de la demande: 11.12.2019
(73) Titulaire: Wid Group, 27300 Bernay (FR)
(72) Inventeur: MONGRENIER, Alexandre, 27500 Manneville-Sur-Risle (FR); SUDRE, Benoît, 91190 Gif Sur Yvette (FR)
(74) Mandataire: Lavoix
(86) Numéro de dépôt international: PCT/EP2018/052492
(87) Numéro de publication internationale: WO 2018/141836

(56) Documents cités:
- WO-A1-2017/216746
- US-A1- 2015 198 474
- Watgrid: "Winegrid - Smart Bung", youtube, 24 novembre 2016 (2016-11-24), page 1 pp., XP054977596, Extrait de l'Internet: URL:https://www.youtube.com/watch?v=J-j8Tw WICg4 [extrait le 2017-07-27]
- Andrei Prida ET AL: "Capteur de niveau pour barrique (bonde électronique)", , 7 décembre 2016 (2016-12-07), XP055394025, Extrait de l'Internet: URL:http://vinitiques.com/wp-content/uploa ds/2016/12/7.-Seguin-Moreau-Winegrid-.pdf [extrait le 2017-07-26]
- Anonymous: "WINEGRID - WATGRID", , 7 novembre 2016 (2016-11-07), XP055394408, Extrait de l'Internet: URL:https://web.archive.org/web/2016110711 1934/https://watgrid.com/winegrid/ [extrait le 2017-07-27]
- WENQI ZHANG ET AL: "Distributed Wireless Monitoring System for Ullage and Temperature in Wine Barrels", SENSORS, vol. 15, no. 8, 10 août 2015 (2015-08-10), pages 19495-19506, XP055394003, DOI: 10.3390/s150819495

## Description

La présente invention concerne un procédé de suivi d'un parc de barriques. La présente invention se rapporte également à un appareil de suivi associé.

La vidéo Youtube Watgrid: "Winegrid - Smart Bung", 24 novembre 2016 (2016-11 - 24) accessible au lien www.youtube.com/watch?v=j8TlCg4 présente une plateforme de contrôle et de surveillance de production de vin, permettant de suivre en temps réel et à distance les paramètres de vinification.

Le document "Capteur de niveau pour barrique (bonde électronique) ", Andrei Prida ET AL ,7 décembre 2016 (2016-12-07), divulgue une bonde électronique pour barrique, comprenant des capteurs permettant de suivre les paramètres de vinification. La bonde est utilisée dans une plateforme de suivi.

La publication de brevet U82015198474 divulgue un tonneau de vieillissement, tel que pour le vin, le whisky et autres, comprenant un ensemble de capteurs disposés dans la bonde pour détecter des paramètres à l'intérieur du tonneau. Un émetteur-récepteur envoie les signaux à un système informatique qui analyse les signaux et détermine si les paramètres de la barrique ont atteint ou tendent vers un profil de barrique anormal. Des alertes peuvent être envoyées aux utilisateurs finaux, par exemple par SMS ou par courrier électronique, pour permettre de prendre des mesures correctives. Dans un exemple, un profil de température de plusieurs barils dans une installation de stockage peut être obtenu et les barils peuvent être déplacés pour obtenir les caractéristiques de température souhaitées.

Le document: "Distributed Wireless Monitoring System for Ullage and Temperature in Wine Barrels", WENQI ZHANG ET AL, paru dans SENSORS, vol. 15, no. 8, 10 août 2015 (2015-08-10), pages 19495-19506, divulgue un capteur polyvalent pour le contrôle simultané de la température et du taux d'humidité du vin en barrique à deux des étapes les plus importantes de la vinification, à savoir la fermentation et la maturation. Un sous-système de capteurs distribués est intégré dans la bonde de la barrique et fonctionne sur batterie pour une période d'au moins 12 mois. Des grappes de sous-système envoient les données des capteurs vers un nœud. Une plateforme informatique supervise l'ensemble des nœuds. En outre, un logiciel a été conçu pour permettre la transmission à distance vers le nœud central et l'interprétation visuelle facile des données pour le vinificateur dans la plateforme. Des signaux d'alerte précoce peuvent être envoyés lorsque la température ou le niveau d'eau s'écarte des attentes du vinificateur, ce qui permet de prendre des mesures correctives.

Dans le domaine vinicole, la maturation du vin dans une barrique est une étape cruciale requérant un savoir-faire très important permettant de garantir une bonne qualité pour le vin obtenu.

Toutefois, ce savoir-faire est un savoir-faire difficile à transmettre. De fait, la maturation du vin dépend de multiples paramètres distincts, dont certains dépendent des opérations mises en œuvre sur la barrique.

En outre, à la multiplicité de paramètres à suivre, s'ajoute la difficulté du nombre de barriques à surveiller, nombre qui est d'autant plus important que la propriété est grande.

Il existe donc un besoin pour un procédé de suivi d'un parc de barriques permettant d'assurer une meilleure pérennité dans le suivi du contenu de chaque barrique du parc, en particulier du vin, sans perte de qualité au long des années.

Pour cela, la présente description porte sur un procédé de suivi d'un parc de barriques par un appareil de suivi de parc de barriques, le procédé étant selon la présente revendication 1.

Suivant des modes de réalisation particuliers, le procédé de suivi comprend une ou plusieurs des caractéristiques suivantes, prise(s) isolément ou suivant toutes les combinaisons techniquement possibles :
- l'appareil de suivi comporte au moins un capteur propre à effectuer une mesure relative à la barrique et au moins une donnée parmi les premières données et les deuxièmes données est une mesure issue d'un capteur.
- le procédé comporte une étape de mise en œuvre d'une analyse statistique sur les données transmises, l'étape d'analyse étant mise en œuvre par la plate-forme de gestion de données.
- à l'étape de collection, au moins une deuxième donnée est obtenue par lecture d'une des premières données.
- à l'étape de collection, au moins une deuxième donnée est distincte des premières données.
- les deuxièmes données comprennent les premières données et des données additionnelles.
- le procédé comporte, en outre, une étape de détermination de la barrique dont le contenu est à déguster comportant le calcul, pour chaque barrique, d'un score de dégustation du contenu de la barrique en fonction des données transmises.
- le procédé comporte, en outre, une étape de comparaison des données transmises à des données de référence et une étape d'alerte lorsque des données transmises sont manquantes ou lorsque des données transmises sont trop éloignées des données de référence.
- au moins une donnée parmi les premières données et les deuxièmes données est une donnée relative à l'élevage du contenu d'une barrique, à la vinification du contenu d'une barrique, ou à l'élaboration du contenu d'une barrique, par exemple une donnée relative au sulfitage, au méchage, à l'ouillage ou au collage du contenu d'une barrique.
- au moins une barrique comporte des cerclages de maintien, le module électronique spécifique de ladite au moins une barrique étant situé sur un cerclage de ladite au moins une barrique.
- pour chaque barrique, la barrique comporte des cerclages de maintien, le module électronique spécifique de la barrique étant situé sur un cerclage de la barrique considérée.
- chaque cerclage comporte des tenons délimitant des espaces, un espace étant situé entre deux tenons, le module électronique étant apposé sur l'espace.
- l'étape de collection est mise en oeuvre par un opérateur.
- le module électronique est réalisé selon deux protocoles de communication distincts, le premier protocole étant un protocole d'identification radio-fréquence, le deuxième protocole étant un protocole de communication en communication proche ou un protocole Ultra Haute Fréquence.
- au moins une barrique comprend une paroi présentant une face intérieure et une face extérieure, la paroi définissant un volume intérieur de ladite barrique compris entre la face intérieure et la face extérieure, le module électronique de ladite au moins une barrique étant situé dans le volume intérieur de ladite au moins une barrique.
- chaque barrique comprend une paroi présentant une face intérieure et une face extérieure, la paroi définissant un volume intérieur de la barrique considérée compris entre la face intérieure et la face extérieure, le module électronique de la barrique considérée étant situé dans le volume intérieur de la barrique considérée.
- au moins une barrique comprend une paroi présentant une face intérieure et une face extérieure, la paroi définissant un volume intérieur de ladite barrique compris entre la face intérieure et la face extérieure, un premier module électronique étant situé dans le volume intérieur compris entre la face intérieure et la face extérieure de la barrique et un deuxième module électronique étant apposé sur la face extérieure de la barrique.
- le nombre de barriques du parc de barriques est supérieur ou égal à 10 barriques.
- le nombre de barriques du parc de barriques est supérieur ou égal à 50 barriques.
- le nombre de barriques du parc de barriques est supérieur ou égal à 100 barriques.
- le contenu de chaque barrique est un produit alimentaire.
- le contenu de chaque barrique est un produit liquide.
- le contenu de chaque barrique est une boisson alcoolisée.
- au moins une donnée parmi les premières données et les deuxièmes données est une mesure effectuée sur la barrique ou sur le contenu de la barrique, notamment une mesure relative à la pression, à la température ou à la concentration en dioxygène du contenu de la barrique.
- le terminal utilisateur lit des données provenant de codes-barres, de codes Datamatrix^{®}, de QR codes, d'estampilles ou de gravures.
- lors de l'étape de collection, le terminal utilisateur lit des données relatives à des éléments nécessaires à l'élaboration du contenu de la barrique, en particulier du gaz, des protéines ou des intrants.
- au moins une donnée parmi les premières données et les deuxièmes données est une donnée relative au numéro de lot du contenu d'une barrique, le procédé comportant, en outre, une étape de détermination des barriques comprenant un contenu de même numéro de lot.

La présente description décrit également un appareil de suivi d'un parc de barriques, l'appareil de suivi étant selon la revendication 14.

Suivant des modes de réalisation particuliers, l'appareil de suivi comprend une ou plusieurs des caractéristiques suivantes, prise(s) isolément ou suivant toutes les combinaisons techniquement possibles :
- l'appareil de suivi comporte au moins un capteur propre à effectuer une mesure relative à la barrique et au moins une donnée parmi les premières données et les deuxièmes données est une mesure issue d'un capteur.
- l'appareil de suivi est adapté pour mettre en oeuvre un procédé de suivi tel que précédemment décrit.
- l'appareil de suivi comporte une plate-forme de gestion de données comportant un module de mise en oeuvre d'une analyse statistique sur des données.
- au moins une deuxième donnée est distincte des premières données.
- les deuxièmes données comprennent les premières données et des données additionnelles.
- l'appareil de suivi comporte une plate-forme de gestion de données comporte un module de détermination de la barrique dont le contenu est à déguster comportant le calcul, pour chaque barrique, d'un score de dégustation du contenu de la barrique en fonction des données transmises.
- l'appareil de suivi comporte une plate-forme de gestion de données comporte un module de comparaison des données transmises à des données de référence et une étape d'alerte lorsque des données transmises sont manquantes ou lorsque des données transmises sont trop éloignées des données de référence.
- au moins une donnée parmi les premières données et les deuxièmes données est une donnée relative à l'élevage du contenu d'une barrique, à la vinification du contenu d'une barrique, ou à l'élaboration du contenu d'une barrique, par exemple une donnée relative au sulfitage, au méchage, à l'ouillage ou au collage du contenu d'une barrique.
- au moins une barrique comporte des cerclages de maintien, le module électronique spécifique de ladite au moins une barrique étant situé sur un cerclage de ladite au moins une barrique.
- pour chaque barrique, la barrique comporte des cerclages de maintien, le module électronique spécifique de la barrique étant situé sur un cerclage de la barrique considérée.
- chaque cerclage comporte des tenons délimitant des espaces, un espace étant situé entre deux tenons, le module électronique étant apposé sur l'espace.
- le module électronique est réalisé selon deux protocoles de communication distincts, le premier protocole étant un protocole d'identification radio-fréquence, le deuxième protocole étant un protocole de communication en communication proche ou un protocole Ultra Haute Fréquence.
- au moins une barrique comprend une paroi présentant une face intérieure et une face extérieure, la paroi définissant un volume intérieur de ladite barrique compris entre la face intérieure et la face extérieure, le module électronique de ladite au moins une barrique étant situé dans le volume intérieur de ladite au moins une barrique.
- chaque barrique comprend une paroi présentant une face intérieure et une face extérieure, la paroi définissant un volume intérieur de la barrique considérée compris entre la face intérieure et la face extérieure, le module électronique de la barrique considérée étant situé dans le volume intérieur de de la barrique considérée.
- au moins une barrique comprend une paroi présentant une face intérieure et une face extérieure, la paroi définissant un volume intérieur de ladite barrique compris entre la face intérieure et la face extérieure, un premier module électronique étant situé dans le volume intérieur compris entre la face intérieure et la face extérieure de la barrique et un deuxième module électronique étant apposé sur la face extérieure de la barrique.
- le nombre de barriques du parc de barriques est supérieur ou égal à 10 barriques.
- le nombre de barriques du parc de barriques est supérieur ou égal à 50 barriques.
- le nombre de barriques du parc de barriques est supérieur ou égal à 100 barriques.
- le contenu de chaque barrique est un produit alimentaire.
- le contenu de chaque barrique est un produit liquide.
- le contenu de chaque barrique est une boisson alcoolisée.
- au moins une donnée parmi les premières données et les deuxièmes données est une mesure effectuée sur la barrique ou sur le contenu de la barrique, notamment une mesure relative à la pression, à la température ou à la concentration en dioxygène du contenu de la barrique.
- le terminal utilisateur lit des données provenant d'autres marqueurs.
- au moins une donnée parmi les premières données et les deuxièmes données est une donnée relative au numéro de lot du contenu d'une barrique, le procédé comportant, en outre, une étape de détermination des barriques comprenant un contenu de même numéro de lot.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une vue en perspective d'un exemple d'une partie d'un d'appareil de suivi d'un parc de barriques,
- figure 2, une vue de côté de la barrique de la figure 1 en section,
- figure 3, une vue schématique d'un cerclage de la barrique de la figure 1, le cerclage étant pourvu d'un module électronique,
- figure 4, une représentation schématique du module de la figure 3, et
- figure 5, une vue schématique d'une partie d'un autre exemple d'appareil de suivi.

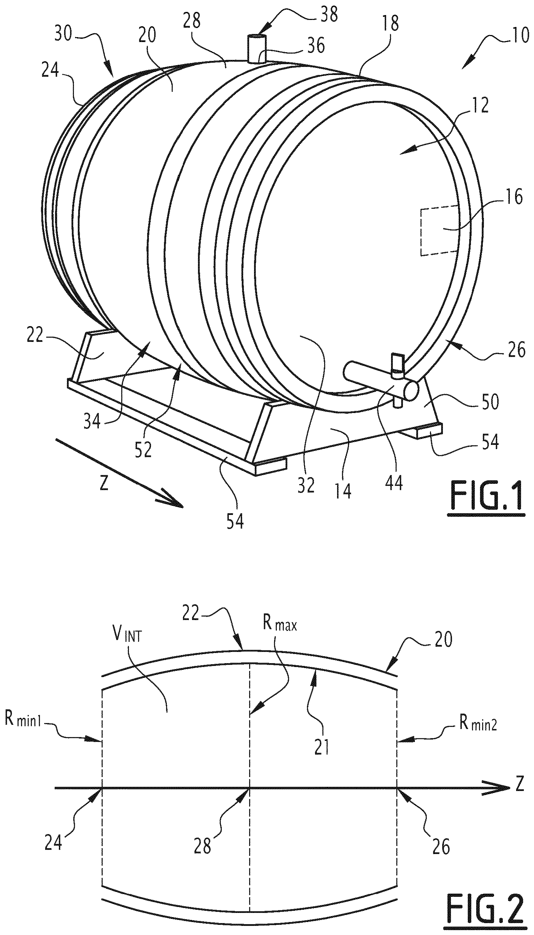

Un appareil de suivi 10 d'un parc de barriques 12 est représenté sur la figure 1.

L'appareil de suivi 10 est propre à assurer le suivi d'une pluralité de barriques 12 formant le parc.

Par exemple, le parc de barriques 12 comporte plus de 10 barriques.

Selon un autre exemple, le parc de barriques 12 comprend au moins 50 barriques 12.

De préférence, le parc de barriques 12 comporte plus de 100 barriques 12.

Par suivi, il est entendu que l'appareil de suivi 10 est propre à suivre l'évolution temporelle d'au moins un paramètre relatif à la barrique 12 ou au contenu de la barrique 12.

L'appareil de suivi 10 comporte, pour chaque barrique 12 du parc, une partie installée sur la barrique 12 et un terminal utilisateur.

Par simplification, seulement une partie de l'appareil de suivi 10 est présentée sur la figure 1, la partie visible étant la partie installée sur une barrique 12. Les autres barriques 12 du parc sont équipées de manière similaire d'une partie installée identique.

La barrique 12 présente sur la figure 1 est une barrique de liquide. La barrique 12 est posée sur un support 14.

La partie installée de l'appareil de suivi 10 est la barrique 12 équipée d'un module électronique 18.

Dans l'exemple présenté, la partie installée de l'appareil de suivi 10 est la barrique 12 équipée d'un capteur 16 et d'un module électronique 18.

En variante, la partie installée de l'appareil de suivi 10 comporte des éléments permettant d'assurer un suivi de la barrique 12 qui sont positionnée extérieurement à la barrique 12. Par l'expression « positionné extérieurement », il est entendu hors du volume intérieur de la barrique 12 et non positionné sur une surface de la barrique 12. Dans un tel exemple, la barrique 12 ne fait pas partie de la partie installée de l'appareil de suivi 10.

Par exemple, le module électronique 18 est positionné sur un présentoir, le présentoir étant à côté de la barrique 12.

Similairement, dans un exemple, le capteur 16 est positionné extérieurement à la barrique 12 et n'en fait donc pas partie. C'est, par exemple, le cas d'un capteur 16 propre à mesurer la température extérieure à la barrique 12.

En outre, il est à noter que le capteur 16 peut, dans certains cas, être partagé par plusieurs barriques 12. Par exemple, un capteur de température positionné à équidistance de deux barriques 12 est apte à mesurer la température extérieure de chacun des barriques 12. Le capteur de température est ainsi spécifique de chaque barrique 12.

De manière générale, la partie installée de l'appareil de suivi 10 regroupe les éléments permettant d'assurer un suivi de la barrique, c'est-à-dire au moins un capteur 16 et un module électronique 18.

Dans le cas particulier décrit, la partie installée de l'appareil de suivi 10 comporte également la barrique 12 puisque le capteur 16 et le module électronique 18 font partie de la barrique 12.

Par le terme « barrique », il est entendu tout contenant comportant des douelles. Par exemple, un tonneau, un quartaut, un fût, une cuve, une jarre ou un foudre sont considérés dans le cadre de la présente description comme des barriques.

La barrique 12 comporte une paroi 20 présentant une face intérieure 21 et une face extérieure 22.

La face intérieure 21 est une surface fermée de sorte que la face intérieure 21 délimite un volume interne Vᵢₙₜ à la barrique 12.

La barrique 12 isole le volume interne Vᵢₙₜ de l'extérieur de la barrique 12.

le volume interne Vᵢₙₜ est destiné à recevoir le contenu de la barrique 12.

Selon l'exemple décrit, le volume interne Vᵢₙₜ est destiné à recevoir une boisson alcoolisée.

En l'occurrence, le volume interne Vᵢₙₜ contient du vin.

Selon d'autres exemples, le volume interne Vᵢₙₜ comporte un spiritueux ou des jus.

Dans tous les cas, le volume interne Vᵢₙₜ comporte une boisson, de sorte que la barrique 12 est une barrique de boisson.

Le volume interne Vᵢₙₜ présente une capacité qui peut être exprimée notamment en litre. La capacité du volume interne est la capacité de la barrique.

Par exemple, la capacité est comprise entre 1 litre et 1500 litres.

L'expression « comprise » est à entendre au sens large. Ainsi, une grandeur A est comprise entre une première valeur A1 et une deuxième valeur A2 lorsque, d'une part, la grandeur A est supérieure ou égale à la première valeur A1 et, d'autre part, la grandeur A est inférieure ou égale à la deuxième valeur A2.

Selon un exemple, la capacité est comprise entre 100 litres et 600 litres, de préférence entre 100 litres et 400 litres.

Selon l'exemple décrit, la barrique 12 a une capacité de 228 litres.

Selon d'autres modes de réalisation, le contenu de la barrique 12 est un produit alimentaire, de préférence sous forme liquide.

La face externe 22 de la paroi 20 donne une forme à la barrique 12.

La barrique 12 présente un axe de symétrie permettant de définir une direction longitudinale. La direction longitudinale est symbolisée par un axe Z sur la figure 1. La direction longitudinale est ainsi notée direction longitudinale Z dans la suite de la description.

La barrique 12 s'étend le long de la direction longitudinale Z entre une première extrémité 24 et une deuxième extrémité 26.

La distance entre la première extrémité 24 et la deuxième extrémité 26 de la barrique 12 définit la longueur de la barrique 12.

La longueur de la barrique 12 est de quelques mètres.

Dans chaque plan perpendiculaire à la direction longitudinale Z, la section de la barrique 12 présente la même forme géométrique.

Selon l'exemple de la figure 1, la forme géométrique est un disque pour lequel un rayon est défini.

Comme visible sur la figure 2, lorsque les sections de la barrique 12 sont parcourues depuis la première extrémité 24 vers la deuxième extrémité 26, le rayon de la section augmente depuis un premier rayon minimal Rₘᵢₙ₁ jusqu'à un rayon maximal Rₘₐₓ puis diminue jusqu'à un deuxième rayon minimal Rₘᵢₙ₂.

Le premier rayon minimal Rₘᵢₙ₁ est égal au deuxième rayon minimal Rₘᵢₙ₂. L'égalité Rₘᵢₙ₁ = Rₘᵢₙ₂ est donc vérifiée pour la barrique 12 de la figure 1. Dans la suite, pour désigner cette valeur, l'expression rayon minimal Rₘᵢₙ est utilisée.

Dans une telle configuration, le rayon maximal Rₘₐₓ est atteint à un point correspondant au centre 27 de la barrique 12.

Le rapport entre le rayon minimal Rₘᵢₙ et le rayon maximal Rₘₐₓ est supérieur à 80% de sorte que la barrique 12 présente une forme cylindrique légèrement bombée au niveau du centre 27.

La paroi de la barrique 12 comporte trois parties : une partie latérale 28 et deux fonds 30 et 32.

La partie latérale 28 est formée par des douelles 34 assemblées par des cerclages 36.

Les douelles 34 sont des planches.

Les douelles 34 s'étendent entre la première extrémité 24 de la barrique 12 et la deuxième extrémité 26 de la barrique 12.

Les douelles 34 sont, par exemple, réalisées en bois.

Selon un autre exemple, les douelles 34 sont réalisées en plastique, en céramique ou en acier inoxydable.

Une douelle 34 délimite un trou de bonde.

Le trou de bonde est un trou traversant destiné à être bouché par une bonde 38. La bonde 38 est visible sur la figure 1.

Le trou de bonde permet à un opérateur de surveiller le contenu de la barrique 12.

Chaque cerclage 36 est un cerclage de maintien. Les cerclages 36 assurent l'assemblage et le maintien des douelles 34 en position.

Chaque cerclage 36 est positionné parallèlement aux fonds 30 et 32, c'est-à-dire perpendiculaire à la direction longitudinale Z.

Chaque cerclage 36 est réalisé en métal.

Chaque cerclage 36 présente une forme annulaire.

La forme annulaire est spécifique puisque que le rayon du disque délimité par le cerclage 36 évolue de manière monotone le long de la direction longitudinale Z.

La forme annulaire s'étend le long de la direction longitudinale Z entre une première extrémité et une deuxième extrémité. La distance entre les deux extrémités le long de la direction longitudinale Z est appelée longueur du cerclage 36.

La longueur du cerclage 36 est comprise entre 3 centimètres et 7 centimètres.

Chaque cerclage 36 présente une forme annulaire complète Cela signifie que le cerclage 36 entoure les douelles 34 de manière continue.

Pour cela, les cerclages 36 sont fixés aux douelles 34, par exemple par de la visserie.

La visserie est cachée par des tenons 38 et 40.

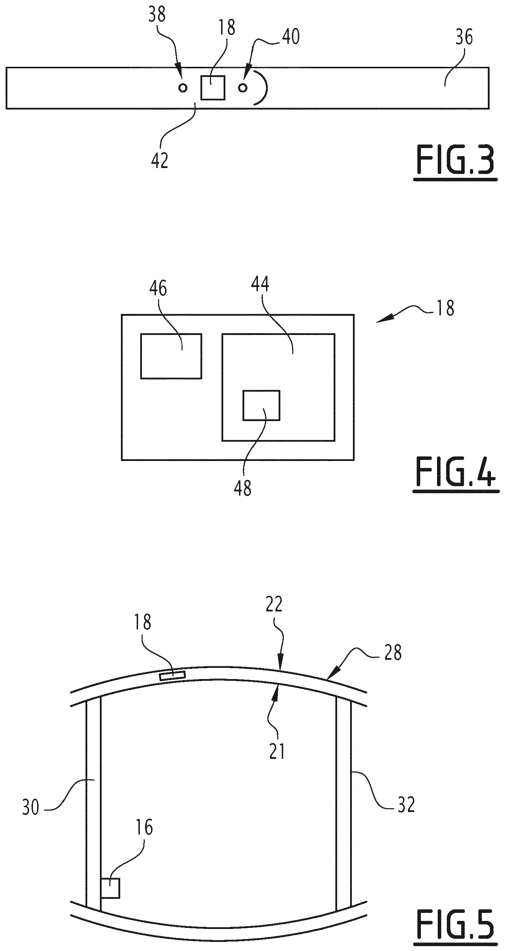

Comme visible notamment sur la figure 3, chaque cerclage 36 comporte des tenons 38 et 40 situés à une distance de quelques centimètres.

Les tenons 38 et 40 délimitent deux espaces sur le cerclage 36. L'espace le plus petit est repéré par le signe de référence 42 pour la suite de la présente demande.

Dans l'exemple représenté sur la figure 1, la barrique 12 comporte six cerclages 36 distincts.

Les six cerclages 36 sont positionnés de manière symétrique par rapport au centre de la barrique 12.

En variante, le nombre de cerclages 36 est différent.

Par exemple, le nombre de cerclages est égal à quatre ou huit.

De manière générale, le nombre de cerclages est pair pour permettre un positionnement symétrique des cerclages 36 par rapport au centre de la barrique 12.

En variante, la barrique 12 est dépourvue de cerclages 36. C'est le cas, par exemple, lorsque les douelles 34 sont réalisées en acier inoxydable.

Chaque fond 30 et 32 est un disque de même rayon.

Le premier fond 30 est à proximité de la première extrémité 24 de la barrique 12. Plus précisément, le premier fond 30 est dans un renfoncement de la paroi latérale 20.

Similairement, le deuxième fond 32 est à proximité de la deuxième extrémité 26 de la barrique 12. Plus précisément, le deuxième fond 32 est dans un renfoncement de la paroi latérale 20.

Dans l'exemple décrit, les fonds 30 et 32 sont symétriques par rapport à un plan normal à la direction longitudinale Z et passant par le centre 27 de la barrique 12.

Selon l'exemple décrit, le premier fond 30 comporte un robinet 44.

Le robinet 44 est mobile entre une position ouverte et une position fermée.

Dans la position ouverte, le robinet 44 permet l'écoulement du liquide contenu dans la barrique 12.

Dans la position fermée, la barrique 12 est fermée et aucun écoulement du liquide n'est possible.

Le robinet 44 est parfois aussi dénommé cannelle ou robinet de vidage.

En variante, chaque fond 30 et 32 est pourvu d'un robinet 44.

Le capteur 16 est un capteur propre à mesurer un paramètre relatif à la barrique 12 ou au contenu de la barrique 12, en l'occurrence le vin ici.

Par exemple, le capteur 16 est fixé à la bonde 38. Lorsque la bonde 38 bouche le trou de bonde, le capteur 16 est dans le volume interne Vᵢₙₜ.

Par exemple, le paramètre mesuré est la pression. Le capteur 16 est alors un capteur de pression.

En variante ou en complément, le paramètre que le capteur 16 est propre à mesurer est la turbidité de la boisson alcoolisée dans la barrique 12, la température, la couleur, le niveau de boisson alcoolisée dans la barrique 12, l'acidité, le pH, la concentration en dioxygène de la boisson alcoolisée dans la barrique 12, la quantité en volume de sucre ou la quantité en volume d'alcool.

Comme illustré par la figure 4, le module électronique 18 comprend une puce électronique 44 et une antenne 46.

La puce électronique 44 présente une aire inférieure à 1 mm² de sorte que la puce électronique est souvent qualifiée de « micro-puce électronique ».

La puce électronique 44 comporte une mémoire 48 propre à mémoriser des données.

Les données sont des données spécifiques à la barrique 12 (que ce soit la barrique 12 elle-même ou le contenu de la barrique 12).

Pour cette raison, le module électronique 18 est un module «spécifique à la barrique 12 ».

Le nom du tonnelier de la barrique 12, l'année de fabrication de la barrique 12, le type de chauffe, le type de bois de la barrique 12, le volume de la barrique 12, la référence de fabrication attribuée à la barrique 12, la date d'entrée en stock, la référence attribuée à la barrique 12 à l'entrée dans le parc de barriques 12, le statut de la barrique 12 sont des exemples de données spécifiques à la barrique 12.

Le statut de la barrique 12 correspond à l'orientation du trou de bonde de la barrique 12 lorsque la barrique 12 est positionnée sur le support 14.

Par exemple, la barrique 12 est orientée de façon à ce que le trou de bonde ne soit pas en contact avec le contenu de la barrique 12. Cela permet d'accélérer l'oxygénation du contenu de la barrique 12.

Par exemple encore, la barrique est orientée de façon à ce que le trou de bonde soit en contact avec le contenu de la barrique 12. Cela permet de ralentir l'oxygénation du contenu de la barrique 12.

Le numéro de lot du contenu de la barrique 12 est un autre exemple de données spécifiques à la barrique 12.

Dans l'exemple décrit, la couleur du vin contenu dans la barrique 12, le millésime du vin contenu dans la barrique 12 sont également des exemples de données spécifiques à la barrique 12.

La ou les opérations mises en œuvre sur la barrique 12 sont d'autres exemples de données spécifiques à la barrique 12. L'ouillage, le soutirage, le collage ou le transfert sont des illustrations spécifiques de telles opérations.

L'antenne 46 permet l'échange de signaux selon un protocole appelé « premier protocole ».

Le premier protocole est, par exemple, conforme aux standards ISO14443 (protocole NFC) ou ISO15693 (protocole RFID). La portée de communication selon le premier protocole est, de préférence, inférieure à 50 centimètres (cm).

L'antenne 46 présente une surface correspondant à quelques mm².

Le module électronique 18 est situé sur un cerclage 36.

Selon l'exemple de la figure 1, le module électronique 18 est apposé sur l'espace le plus petit 42 d'un cerclage 36.

Avantageusement, le module électronique 18 présente alors une forme ronde.

Le support 14 comporte deux parties de soutien 50 et 52 reliées par deux renforts 54.

Les parties de soutien 50 et 52 s'étendent principalement selon un plan normal à la direction longitudinale Z tandis que les renforts 54 s'étendent principalement selon la direction longitudinale Z.

Chaque partie de soutien 50 et 52 est positionnée entre deux cerclages 36 de la barrique 12.

Comme expliqué précédemment, l'appareil de suivi 10 comporte, pour chaque barrique 12, au moins un capteur 16 propre à effectuer une mesure relative à la barrique 12 et un module électronique 18, le module électronique 18 étant spécifique à la barrique 12 considérée et comprenant une mémoire 48 propre à enregistrer des données.

Par exemple, la mémoire 48 est propre à enregistrer des données en clair et des données chiffrées.

Les données en clair sont accessibles par tout lecteur propre à communiquer avec le module électronique 18. Les données chiffrées sont accessibles par un lecteur propre à communiquer avec le module électronique 18 à l'aide d'une clé de déchiffrement.

Cela permet de garantir la sécurité des données enregistrées dans la mémoire 48.

L'appareil de suivi 10 comporte, en outre, un terminal utilisateur.

Le terminal utilisateur est, par exemple, un assistant personnel numérique plus généralement désigné sous le sigle PDA pour le terme anglais de « personal digital assistant ».

Le terminal utilisateur est assimilable à un module de traitement.

Le terminal utilisateur comprend un logiciel de traitement mémorisé dans une mémoire, un processeur sur lequel le logiciel de traitement peut être exécuté, et une interface homme/machine comprenant selon le cas représenté un écran.

En variante, l'interface homme/machine comporte un écran et un clavier.

Dans chaque cas, le terminal utilisateur est un terminal mobile.

Le terminal utilisateur est propre à fonctionner selon un premier mode de fonctionnement et un deuxième mode de fonctionnement.

Le terminal utilisateur est propre à communiquer avec une plate-forme de gestion de données dans le premier mode de fonctionnement. Pour cette raison, le premier mode de fonctionnement est parfois appelée « mode ONLINE » (signifiant en français « mode en ligne » ou mode « connecté »).

La plate-forme de gestion de données est, par exemple, un ordinateur sur lequel est mis en œuvre un programme de gestion de données.

Selon l'exemple proposé, le programme de gestion de données est un site internet utilisant les données transmises. Dans ce cas, la plate-forme de gestion de données est qualifiée de « plate-forme web ». Cela permet d'accéder à la plate-forme de gestion de données depuis tout endroit.

La communication est notamment mise en œuvre via un réseau de communications.

Par exemple, le réseau de communication est un local sans fil, de type WIFI.

Le terminal utilisateur n'est pas propre à communiquer avec une plate-forme de gestion de données dans le deuxième mode de fonctionnement. Pour cette raison, le deuxième mode de fonctionnement est parfois appelée « mode OFFLINE » (signifiant en français « mode hors ligne » ou mode « déconnecté »).Le terminal utilisateur est, en outre, pourvu d'au moins un lecteur de communication sans fil fonctionnant dans les deux modes de fonctionnement.

Dans l'exemple décrit, le terminal utilisateur comporte un lecteur conforme au premier protocole et au moins l'un parmi un lecteur de code-barres, un lecteur de codes Datamatrix ^{®} ou un lecteur de QR codes.

Selon une variante, l'appareil de suivi 10 comporte un carnet d'entretien de la barrique 12.

Le carnet d'entretien se présente, par exemple, sous format papier ou sous format numérique utilisable par le terminal utilisateur.

Le carnet d'entretien comprend des informations relatives à l'entretien de la barrique 12 lors de son séjour dans le parc de barriques 12.

En variante ou en complément, le carnet d'entretien comprend des informations relatives à l'entretien de la barrique 12 lors de sa fabrication.

Le carnet d'entretien est tenu par un opérateur chargé de relever chaque opération d'entretien effectuée sur la barrique 12.

Le lavage, le passage à la vapeur d'eau et le séchage sont des exemples spécifiques d'opérations d'entretien.

En variante ou en complément, le carnet d'entretien comprend des informations relatives aux analyses laboratoires de la barrique 12 ou du contenu de la barrique 12.

Le carnet d'entretien garantit la qualité de la barrique 12, par exemple en cas de revente de la barrique 12.

Selon une autre variante, l'appareil de suivi 10 comporte une fiche de travail par opérateur du parc de barriques 12.

La fiche de travail est spécifique à chaque opérateur.

La fiche de travail se présente, par exemple, sous format papier ou sous format numérique utilisable par le terminal utilisateur.

La fiche de travail d'un opérateur comprend, par exemple, des informations relatives aux opérations d'entretien des barriques 12, ou des opérations mises en œuvre sur la barrique 12 effectuées par l'opérateur.

La date de l'opération, la nature de l'opération, la durée de l'opération ou la date programmée pour la prochaine opération sont des exemples spécifiques d'informations relatives aux opérations effectuées par l'opérateur.

Cela permet de fiabiliser les opérations effectuées pour chaque barrique 12 ainsi que d'éviter d'oublier une opération à effectuer.

Selon une autre variante, l'appareil de suivi 10 comporte un carnet de dégustation.

Le carnet de dégustation comprend des informations relatives à la dégustation du contenu de la barrique 12.

Le carnet de dégustation se présente, par exemple, sous format papier ou sous format numérique utilisable par le terminal utilisateur.

Le carnet de dégustation est tenu par un opérateur dégustant le contenu de la barrique 12.

La robe, le nez, les saveurs et les arômes sont des exemples spécifiques d'informations relatives à la dégustation du contenu de la barrique 12.

Le carnet de dégustation garantit la qualité du contenu de la barrique 12.

Le fonctionnement de l'appareil de suivi 10 est maintenant décrit en référence à un exemple de mise en œuvre d'un procédé de suivi d'un parc de barriques 12.

Il est supposé fourni un parc de barriques 12 et un appareil de suivi 10 tel que décrit en référence aux figures 1 à 4.

En variante, il est fourni un parc de barriques 12. Le parc de barriques 12 est alors équipé par l'appareil de suivi 10.

Le procédé de suivi comporte, pour chaque barrique 12, une étape d'enregistrement de premières données dans la mémoire 48 du module électronique 18.

Les premières données sont relatives à la barrique 12 considérée.

Cela signifie que chaque mémoire 48 de chaque module électronique 18 comporte des données relatives à la barrique 12 dont le module électronique 18 est spécifique.

Dans l'exemple décrit, chaque mémoire 48 comporte les mêmes données.

Notamment, chaque mémoire 48 mémorise l'évolution temporelle d'au moins un paramètre relatif à la barrique 12 ou au contenu de la barrique 12.

Dans l'exemple proposé, chaque mémoire 48 mémorise l'évolution temporelle de la pression dans le volume interne Vᵢₙₜ.

Le procédé de suivi comprend également une étape de collection de deuxièmes données par le terminal utilisateur fonctionnant dans le deuxième mode de fonctionnement.

Les deuxièmes données sont relatives au parc de barriques 12.

Des données relatives à une barrique 12 du parc sont des données relatives au parc de barriques 12.

Dans l'exemple proposé, les deuxièmes données sont un ensemble de données regroupant les premières données et des données additionnelles.

La collection des premières données par le terminal utilisateur est mise en œuvre par lecture des premières données dans chaque mémoire.

Les deuxièmes données comportent donc l'évolution temporelle de la pression dans le volume interne Vᵢₙₜ de chaque barrique 12.

Les données additionnelles sont obtenues par un opérateur tenant le terminal utilisateur. Par exemple, l'opérateur entre les données dans le terminal utilisateur.

En variante, le terminal utilisateur lit des données provenant d'autres éléments ou d'un autre marqueur comme des codes-barres, des codes Datamatrix ^{®}, des QR codes, des estampilles ou des gravures.

Par exemple, le terminal utilisateur lit des données relatives à des éléments nécessaires à l'élaboration du contenu de la barrique 12.

Les éléments nécessaires à l'élaboration du contenu de la barrique comprennent, par exemple, le gaz, les protéines ou les intrants ajoutés dans le contenu de la barrique 12.

Un intrant est un produit qui n'est pas naturellement présent dans le vin et qui est apporté au cours de la vinification. Par exemple, l'intrant est de l'acide citrique ou de l'anhydride sulfureux.

Le procédé de suivi comprend aussi une étape de transmission des données par le terminal utilisateur vers la plate-forme de gestion.

La transmission des deuxièmes données est mise en œuvre lorsque le terminal utilisateur fonctionne dans le premier mode de réalisation.

La transmission est, par exemple, mise en œuvre à travers le réseau local sans fil.

Pour cela, le terminal utilisateur est reposé sur un socle assurant le basculement du terminal utilisateur du deuxième mode de fonctionnement vers le premier mode de fonctionnement.

Un tel procédé permet d'assurer un suivi de l'évolution du contenu des barriques 12 à l'aide d'un appareil de suivi 10 dédié, et notamment par l'emploi de la plate-forme de gestion de données.

Le procédé permet donc d'assurer un suivi du contenu de chaque barrique 12 sans interagir avec le contenu. Cela améliore la traçabilité du contenu de chaque barrique 12. Cela améliore également l'inventaire du contenu de chaque barrique 12.

En particulier, le procédé de suivi permettant d'assurer une meilleure pérennité dans le suivi du contenu de chaque barrique 12 sans perte de qualité au long des années.

De fait, l'utilisation des premières et deuxièmes données permet de garantir la qualité du vin contenu dans les barriques, sans erreur, par le suivi de l'évolution temporelle d'au moins un paramètre issu d'un capteur 16.

Il est entendu que l'utilisation des premières et deuxièmes données permet également de garantir la qualité du vin contenu dans les barriques, sans erreur, par le suivi de l'évolution temporelle d'au moins un paramètre lorsque ce paramètre n'est pas issu d'un capteur 16.

Le procédé de suivi améliore également la traçabilité globale du parc de barriques 12. Cela améliore également l'inventaire du parc de barriques 12.D'autres modes de réalisation du procédé de suivi sont envisageables.

Par exemple, selon un mode de réalisation particulier, les premières données sont transmises à la plate-forme de gestion sans passer par le terminal utilisateur. Par exemple, les premières données sont lues par un opérateur puis inscrite dans la plateforme de gestion.

En variante, les premières données sont transmises à la plate-forme de gestion sans passer par le terminal utilisateur et en passant par le terminal utilisateur pour assurer une redondance de l'information.

Selon un mode de réalisation particulier, une des données transmises est une donnée relative au sulfitage.

Le sulfitage est une opération consistant à apporter au moût ou au vin une quantité d'anhydride sulfureux (SO₂) pour permettre une bonne vinification et favoriser une meilleure conservation.

Par exemple, la donnée au sulfitage est une information sur la quantité d'anhydride sulfureux introduite dans le contenu de la barrique 12.

Selon un autre exemple, l'information relative au sulfitage est une information relative à la ou les dates auxquelles de l'anhydride sulfureux a été introduit dans le contenu de la barrique 12.

De préférence, une donnée relative au sulfitage de chaque barrique 12 est présente dans les premières données ou les deuxièmes données.

Selon un autre exemple, les données transmises sont des données provenant d'une pluralité de capteurs 16.

Notamment, les données transmises sont des données de température du contenu et de pression du contenu de chaque barrique 12.

Selon un autre exemple, les données transmises sont des données relatives à la la concentration en dioxygène de la boisson alcoolisée dans chaque barrique 12.

Selon des exemples plus évolués, le procédé de suivi comporte des étapes supplémentaires.

Par exemple, le procédé comporte une étape de mise en œuvre d'une analyse statistique sur les données transmises, l'étape d'analyse étant mise en œuvre par la plate-forme de gestion de données.

Par exemple, l'étape d'analyse statistique comprend une étape de comparaison de plusieurs barriques 12 entre elles par comparaison de l'évolution temporelle d'un ou plusieurs paramètres mesurés par le capteur 16 de chaque barrique 12.

Cela permet de connaître l'influence de facteurs donnés, par exemple la nature du bois de la barrique 12 ou le procédé de fabrication de la barrique 12, sur le contenu de chaque barrique 12.

Par exemple encore, l'étape d'analyse statistique comprend la fourniture de résultats obtenus à partir des données transmises et l'export des résultats dans un fichier.

Un tableur, un fichier PDF, ou un fichier au format Print sont des exemples spécifiques de fichiers pour l'export des résultats.

Cela permet l'édition de rapports à tout moment.

En fin de maturation, il est courant de mettre en œuvre un soutirage partiel du contenu de la barrique 12. La barrique 12 est vidée jusqu'à un niveau résiduel non nul de contenu de la barrique 12.

L'étape d'analyse statistique comprend, par exemple, une étape de calcul du niveau résiduel de contenu de la barrique 12 après un soutirage partiel.

Selon un exemple, le procédé de suivi de données comporte un interfaçage avec un logiciel de suivi d'élevage du contenu de la barrique 12.

Selon un autre exemple, le procédé comporte une étape de détermination de la barrique dont le contenu est à déguster par calcul, pour chaque barrique 12, d'un score de dégustation du contenu de la barrique 12 en fonction des données.

A titre d'illustration, la barrique 12 dont le contenu présente la pression la plus haute tout en étant inférieure à une valeur seuil est sélectionnée pour être dégusté par un potentiel client. Cela permet de faire goûter au potentiel client lors d'une visite du parc de barriques 12 un contenu ayant déjà une bonne valeur gustative.

La fonction effectivement employée dépendra du savoir-faire des personnes chargées de la maturation du contenu des barriques.

Selon un autre exemple, le procédé comporte, en outre, une étape de détermination des barriques 12 comprenant un contenu de même numéro de lot.

Cela permet d'appliquer des opérations à plusieurs barriques ayant un contenu de même numéro de lot.

Selon un autre exemple, le procédé de suivi comporte une étape de sélection de barriques 12 nécessitant une ou plusieurs opérations par un opérateur.

L'opérateur saisit un critère de sélection dans le terminal utilisateur, par exemple le numéro de lot d'une ou plusieurs barriques 12, le numéro de lot du contenu d'une ou plusieurs barriques 12, la tonnellerie d'origine d'une ou plusieurs barriques 12.

Le terminal utilisateur identifie la ou les barriques sélectionnées et renvoie l'information à l'opérateur.

Cela permet d'appliquer des opérations à une ou plusieurs barriques selon un critère choisi par l'utilisateur, et de gagner du temps lors de la saisie d'opérations.

Selon un autre exemple, le procédé de suivi comporte une étape de comparaison des données transmises relatives à une barrique 12 à des données de référence pour une barrique 12 et une étape d'alerte lorsque des données transmises sont manquantes ou lorsque des données sont trop éloignées des données de référence.

Les données de référence sont, par exemple, mémorisées dans la plate-forme de gestion.

Si aucune donnée transmise sur un sulfitage n'est présente pour une barrique 12, cela peut signifier que l'opération pour la barrique 12 considérée n'a pas été mise en œuvre ou que les données relatives à l'opération n'ont pas été collectées ou relevées.

Par l'expression « trop éloignée », il est entendu que la distance en valeur entre la donnée transmise et la donnée de référence est strictement supérieure à une valeur seuil.

De préférence, la valeur seuil est paramétrable, notamment depuis la plate-forme de gestion.

Par exemple, si la pression du volume interne V_{INT} est trop basse, cela peut signifier qu'un trou est présent dans la barrique 12 et qu'il convient de boucher le trou pour ne pas dégrader la qualité du contenu de la barrique 12.

Le procédé de suivi de données est propre à mettre en œuvre une demande de maintenance de la barrique 12 en ligne.

Un opérateur est averti d'un problème, et il peut faire une demande de maintenance en ligne à l'aide du programme de gestion de données. Un numéro de maintenance est affecté à la demande de maintenance.

Selon un autre exemple, la demande de maintenance en ligne est faite par un opérateur après l'identification d'un problème par l'opérateur.

Selon un autre exemple, si le niveau de boisson alcoolisée contenu dans la barrique 12 est trop bas, cela signifie qu'il convient de procéder à une opération d'ouillage dans la barrique 12.

Selon une variante, le procédé comporte l'écriture de premières données dans chaque mémoire 48 à l'aide du terminal utilisateur.

Par exemple, cela permet d'effectuer une migration de données présentes sous forme d'estampilles, de gravures, de code-barres, de codes Datamatrix ^{®} ou de QR codes dans chaque mémoire 48.

Cela permet également d'écrire dans chaque mémoire 48 des premières données qui ne sont pas mesurables par un capteur 16, par exemple la tonnellerie d'origine de la barrique 12, ou le numéro de lot du contenu de la barrique 12.

Les premières données comportent, par exemple, un numéro de série de la barrique 12, notamment un numéro de série gravé sur une partie de la barrique 12. Par exemple, le numéro de série est gravé sur un cerclage 36.

En vinification, il est courant de mélanger plusieurs vins contenus dans des premières barriques 12 du parc de barriques 12 distinctes et de les transvaser dans une même seconde barrique 12 distincte des premières barriques 12.

Dans ce cas, l'écriture de premières données dans chaque mémoire 48 à l'aide du terminal utilisateur comprend, par exemple, l'écriture de premières données relatives aux contenus des premières barriques 12 dans la mémoire 48 du module électronique 18 de la seconde barrique 12.

Notamment, la proportion de chaque contenu des premières barriques 12, les numéros de lot des contenus des premières barriques 12, la couleur des vins contenus dans les premières barriques 12, les millésimes des vins contenus dans les premières barriques 12, la durée de séjour des contenus des premières barriques 12, les références attribuées aux premières barriques 12 à l'entrée dans le parc de barriques 12, sont des exemples spécifiques de premières données écrites dans la mémoire 48 du module électronique 18 de la seconde barrique 12.

Cela permet une traçabilité améliorée de chaque barrique 12 et du contenu de chaque barrique 12 du parc de barriques 12, tout au long de la maturation du contenu des barriques 12. Cela améliore également l'inventaire de chaque barrique 12 et du contenu de chaque barrique 12.

A titre d'illustration, en cas de détection d'une barrique contaminée, il est possible d'identifier tous les liquides ayant été contenus dans la barrique, et de les éliminer pour garantir une sécurité sanitaire.

Selon un mode de réalisation, l'accès au terminal utilisateur ou à la plate-forme de gestion de données suppose l'identification d'un utilisateur autorisé.

Par exemple, l'accès est codé par des mots de passe.

En variante, le terminal utilisateur est utilisé pour scanner un badge, l'utilisateur ne pouvant accéder au terminal utilisateur que si le badge est authentifié.

Selon un autre mode de réalisation, l'accès suppose d'entrer un mot de passe et d'authentifier un badge scanné.

Il est, en outre, avantageux que la ou les personnes ayant accès au terminal utilisateur soit distincte de la ou les personnes ayant accès à la plate-forme de gestion de données.

En variante, les accès de ces personnes sont différenciés. Par exemple, la ou les personnes ayant accès au terminal utilisateur en écriture et en lecture n'a un accès qu'en lecture à la plate-forme de gestion de données.

En complément, la ou les personnes ayant accès la plate-forme de gestion de données en écriture et en lecture n'a un accès qu'en lecture au terminal utilisateur.

Le procédé de suivi peut concerner de multiples types de données distincts.

Un exemple particulier est décrit plus précisément dans ce qui suit.

Les données comportent des données relatives au contenant comme la tonnellerie d'origine de la barrique 12, le volume de la barrique 12 ou le type de chauffe.

Les données comportent, en outre, des données relatives aux opérations mises en œuvre sur la barrique 12 à vide.

Parmi ces opérations, la réception, la préparation, la mise en vin, le rinçage, l'échaudage, le méchage, le statut ou la réparation sont des exemples spécifiques.

Les données comportent, en outre, des données relatives aux opérations mises en œuvre sur la barrique 12 une fois remplie.

Parmi ces opérations, la mise en place, la dégustation, l'ouillage, le soutirage, le collage, le transfert, le sulfitage ou le vidage sont des exemples spécifiques.

Les données comportent, en outre, des données relatives au contenu de la barrique 12.

Parmi ces données, le numéro de lot du contenu de la barrique 12, la couleur du vin contenu dans la barrique 12, le millésime du vin contenu dans la barrique 12 sont des exemples spécifiques.

Comme expliqué précédemment, les données précédentes sont soit des premières données, soit des deuxièmes données, chacune de ces données étant transmises à la plate-forme de gestion de données.

Selon un autre mode de réalisation, la position de chaque module électronique 18 est spécifique.

Selon l'exemple de la figure 5, la paroi 20 définit un volume intérieur compris entre la face intérieure 21 et la face extérieure 22.

Le module électronique 18 est situé dans le volume intérieur.

Par exemple, le module électronique 18 est dans une douelle 34 ou dans un fond 30 ou 32.

L'intégration d'un module électronique 18 dans la paroi de la barrique 12 permet de garantir une intégrité du module électronique 18 et des informations que le module électronique 18 contient, et ne rend pas accessible facilement le module électronique 18.

D'autres localisations du module électronique 18 sont possibles.

Par exemple, le module électronique 18 est apposé sur la face extérieure d'un fond de la barrique 12.

Selon une variante, un premier module électronique 18 est situé dans le volume intérieur compris entre la face intérieure 21 et la face extérieure 22 de la barrique 12 et un deuxième module électronique 18 est apposé sur la face extérieure 21 de la barrique 12.

Selon d'autres exemples non représentés, la barrique 12 présente d'autres formes que la forme des barriques des figures 1 à 5. Par exemple, la barrique 12 présente une forme tronconique ou parallélépipédique.

D'autres modes de réalisation sont également envisageables pour l'appareil de suivi 10.

Notamment, les modules électroniques 18 peuvent être de différents types.

Ainsi, les modules électroniques correspondent à tous les dispositifs électroniques (circuits intégrés) permettant de stocker au moins une information et de communiquer avec un autre dispositif selon un protocole de communication sans contact.

Suivant un autre mode de réalisation, le module électronique 18 est un module NFC (en anglais « Near Field Communication » qui signifie « communication de champ proche »), permettant la lecture en champ proche (avec une distance maximum d'environ 4 cm entre le module électronique 18 et le lecteur de puce électronique).

Le protocole de communication est alors un protocole de communication en champ proche de type NFC défini selon les normes reconnues par le Forum NFC, dont les normes ISO/CEI 14443-1 à ISO/CEI 14443-4.

Il est à noter que la norme NFC est une norme de communication sans fil (appelée communication en champ proche ou communication NFC) permettant de faire communiquer les modules électroniques avec un très large nombre d'appareils, notamment les téléphones mobiles sans fil. Ceci permet de tracer la barrique 12 et le contenu de la barrique 12.

Selon un cas particulier, le module électronique 18 est propre à fonctionner selon deux gammes de fréquences distinctes. En ce sens, le module électronique 1 peut être qualifiée de module bi-fréquences.

D'une part, le module électronique 18 est apte à communiquer selon un premier protocole de communication appelé mode UHF. L'acronyme « UHF » renvoie à la terminologie française d'ultra haute fréquence.

Dans un tel protocole de communication, le module électronique 18 est apte à émettre ou à recevoir un signal ayant une fréquence comprise entre 300 MHz et 3 000 MHz.

Selon un exemple, l'appareil de suivi 10 comprend un lecteur de communication sans fil renforcé apte à communiquer selon le mode UHF.

Une raquette RFID ou un pistolet RFID sont des exemples spécifiques de lecteurs de communication sans fil renforcés.

Un tel lecteur est apte à détecter une pluralité de modules électroniques 18 communiquant selon le mode UHF.

De préférence, le lecteur de communication sans fil renforcé est apte à communiquer avec la plate-forme de gestion de données pour transmettre les données lues.

Cela permet de réaliser un inventaire des barriques 12 du parc de barriques 12.

En variante ou en complément de cet exemple, le procédé de suivi comprend une étape de localisation des barriques 12 dans le parc de barriques 12.

Dans ce cas, le procédé de suivi est également propre à localiser des barriques. Par exemple, le procédé de suivi comporte une étape d'enregistrement de la position de chaque barrique 12 dans une mémoire centrale (par exemple dans le serveur) et dans la mémoire 48 du module électronique 18 respectif de chaque barrique 12.

L'étape d'enregistrement de la position de chaque barrique 12 est, par exemple, mise en œuvre après une lecture de l'ensemble des mémoires 48 des modules électroniques 18 respectifs de chaque barrique 12 par un lecteur de communication sans fil renforcé apte à communiquer selon le mode UHF.

Selon cet exemple, un utilisateur de la plate-forme de gestion de données saisit au moins une donnée parmi les premières données ou les deuxièmes données relative à la barrique 12 ou aux barriques 12 recherchées.

Le procédé de suivi comporte alors une étape de traitement de la ou des données saisies.

Le procédé de suivi comporte alors une étape d'envoi d'une information comprenant la position de la barrique 12 ou des barriques 12 recherchées.

L'information est, par exemple, une commande d"allumage d'une lumière située au-dessus de la barrique 12 ou des barriques 12 recherchées dans le parc de barriques 12.

En variante ou en complément, l'information est à afficher sur le terminal utilisateur.

Cela permet d'effectuer un mapping des barriques, et de suivre à tout instant leurs emplacements et leurs déplacements dans le parc de barriques 12.

D'autre part, le module électronique 18 est apte à communiquer selon un deuxième protocole de communication appelé mode HF. L'acronyme « HF » renvoie à la terminologie française d'haute fréquence.

Dans un tel protocole, le module électronique 18 est apte à émettre ou à recevoir un signal ayant une fréquence comprise entre 3 MHz et 30 MHz.

Un tel module électronique 18 est difficile à imiter, permet un suivi et une traçabilité efficace. Un tel module électronique 18 permet également un inventaire efficace.

En outre, un tel module électronique 18 permet de communiquer avec un très large nombre d'appareils.

L'invention correspond à toute combinaison techniquement possible des modes de réalisation précédemment décrits.

## Revendications

1. Procédé de suivi d'un parc de barriques (12) par un appareil de suivi de parc de barriques (12), l'appareil de suivi (10) comprenant :
- pour chaque barrique (12), au moins un module électronique (18), le module électronique (18) étant spécifique à la barrique (12) considérée et comprenant une mémoire (48) propre à enregistrer des données, et
- un terminal utilisateur, le terminal utilisateur étant un terminal mobile propre à fonctionner selon un premier mode de fonctionnement et un deuxième mode de fonctionnement, le terminal utilisateur étant propre à communiquer avec une plate-forme de gestion de données dans le premier mode de fonctionnement et ne communiquant pas avec la plate-forme de gestion de données dans le deuxième mode de fonctionnement, le terminal utilisateur étant, en outre, pourvu d'au moins un lecteur de communication sans fil fonctionnant dans les deux modes de fonctionnement,
le procédé comportant une étape de:
- pour chaque barrique, enregistrement de premières données dans la mémoire (48) du module électronique (18) associé, les premières données étant des données relatives à la barrique (12), que ce soit la barrique elle-même ou le contenu de la barrique,
- collection de deuxièmes données par le terminal utilisateur fonctionnant dans le deuxième mode de fonctionnement, les deuxièmes données étant des données relatives au parc de barriques (12), et
- transmission des données à la plate-forme de gestion de données, l'étape de transmission comportant la transmission des deuxièmes données par le terminal utilisateur fonctionnant dans le premier mode de fonctionnement vers la plateforme de gestion de données.

2. Procédé selon la revendication 1, dans lequel l'appareil de suivi comprend au moins un capteur (16) propre à effectuer une mesure relative à la barrique (12), au moins une donnée parmi les premières données et les deuxièmes données étant une mesure issue d'un capteur (16).

3. Procédé selon la revendication 1 ou 2, dans lequel le procédé comporte une étape de mise en œuvre d'une analyse statistique sur les données transmises, l'étape d'analyse étant mise en œuvre par la plate-forme de gestion de données.

4. Procédé selon l'une quelconque des revendications 1 à 3, dans lequel à l'étape de collection, au moins une deuxième donnée est obtenue par lecture d'une des premières données.

5. Procédé selon l'une quelconque des revendications 1 à 4, dans lequel à l'étape de collection, au moins une deuxième donnée est distincte des premières données.

6. Procédé selon l'une quelconque des revendications 1 à 5, dans lequel les deuxièmes données comprennent les premières données et des données additionnelles.

7. Procédé selon l'une quelconque des revendications 1 à 6, dans lequel le procédé comporte, en outre, une étape de détermination de la barrique (12) dont le contenu est à déguster comportant le calcul, pour chaque barrique (12), d'un score de dégustation du contenu de la barrique (12) considérée en fonction des données transmises.

8. Procédé selon l'une quelconque des revendications 1 à 7, dans lequel le procédé comporte, en outre, une étape de comparaison des données transmises à des données de référence et une étape d'alerte lorsque des données transmises sont manquantes ou lorsque des données transmises sont trop éloignées des données de référence.

9. Procédé selon l'une quelconque des revendications 1 à 8, dans lequel au moins une donnée parmi les premières données et les deuxièmes données étant une donnée relative à l'élevage du contenu d'une barrique (12), à la vinification du contenu d'une barrique (12), ou à l'élaboration du contenu d'une barrique (12), par exemple une donnée relative au sulfitage, au méchage, à l'ouillage ou au collage du contenu d'une barrique (12).

10. Procédé selon l'une quelconque des revendications 1 à 9, dans lequel au moins une barrique (12) comprend une paroi présentant une face intérieure et une face extérieure, la paroi définissant un volume intérieur de ladite barrique (12) compris entre la face intérieure et la face extérieure, un premier module électronique (18) étant situé dans le volume intérieur compris entre la face intérieure (21) et la face extérieure (22) de la barrique (12) et un deuxième module électronique (18) étant apposé sur la face extérieure (21) de la barrique (12).

11. Procédé selon l'une quelconque des revendications 1 à 10, dans lequel au moins une donnée parmi les premières données et les deuxièmes données est une mesure effectuée sur la barrique (12) ou sur le contenu de la barrique (12), notamment une mesure relative à la pression, à la température ou à la concentration en dioxygène du contenu de la barrique (12).

12. Procédé selon l'une quelconque des revendications 1 à 11, dans lequel, lors de l'étape de collection, le terminal utilisateur lit des données, les données étant choisies dans le groupe constitué des données provenant de codes-barres, de codes Datamatrix^{®}, de QR codes, d' estampilles ou de gravures, et des données relatives à des éléments nécessaires à l'élaboration du contenu de la barrique (12), en particulier du gaz, des protéines ou des intrants.

13. Procédé selon l'une quelconque des revendications 1 à 12, dans lequel au moins une donnée parmi les premières données et les deuxièmes données est une donnée relative au numéro de lot du contenu d'une barrique (12), le procédé comportant en outre une étape de détermination des barriques (12) comprenant un contenu de même numéro de lot.

14. Appareil de suivi (10) d'un parc de barriques (12), l'appareil de suivi (10) comprenant :
- pour chaque barrique (12), au moins un module électronique (18) étant spécifique à la barrique (12) considérée, le module électronique (18) comprenant une mémoire propre à enregistrer des premières données, les premières données étant des données relatives à la barrique (12), que ce soit la barrique elle-même ou le contenu de la barrique, et
- un terminal utilisateur, le terminal utilisateur étant un terminal mobile propre à fonctionner selon un premier mode de fonctionnement et un deuxième mode de fonctionnement, le terminal utilisateur étant propre à communiquer avec une plate-forme de gestion de données dans le premier mode de fonctionnement et ne communiquant pas avec la plate-forme de gestion de données dans le deuxième mode de fonctionnement, le terminal utilisateur étant, en outre, pourvu d'au moins un lecteur de communication sans fil fonctionnant dans les deux modes de fonctionnement, le terminal utilisateur étant propre à collecter des deuxièmes données dans le deuxième mode de fonctionnement, les deuxièmes données étant des données relatives au parc de barriques (12) et à transmettre les deuxièmes données par le terminal utilisateur fonctionnant dans le premier mode de fonctionnement vers la plate-forme de gestion de données.

15. Appareil de suivi (10) d'un parc de barriques (12) selon la revendication 14, comprenant au moins un capteur (16) propre à effectuer une mesure relative à la barrique (12), au moins une donnée parmi les premières données et les deuxièmes données étant une mesure issue d'un capteur (16).

## Patentansprüche

1. Verfahren zum Verfolgen eines Fassbestands (12) durch ein Verfolgungsgerät für Fassbestand (12), das Verfolgungsgerät (10) umfassend:
- für jedes Fass (12) mindestens ein elektronisches Modul (18), wobei das elektronische Modul (18) spezifisch für das jeweilige Fass (12) ist und einen Speicher (48) umfasst, der geeignet ist, um Daten zu speichern, und
- ein Benutzerterminal, wobei das Benutzerterminal ein mobiles Terminal ist, das geeignet ist, um in einem ersten Betriebsmodus und einem zweiten Betriebsmodus betrieben zu werden, wobei das Benutzerterminal geeignet ist, um in dem ersten Betriebsmodus mit einer Datenverwaltungsplattform zu kommunizieren und in dem zweiten Betriebsmodus nicht mit der Datenverwaltungsplattform zu kommunizieren, wobei das Benutzerterminal ferner mit mindestens einem drahtlosen Kommunikationslesegerät versehen ist, das in beiden Betriebsmodi betrieben werden kann,
das Verfahren umfassend einen folgenden Schritt:
- für jedes Fass, Speichern von ersten Daten in dem Speicher (48) des assoziierten elektronischen Moduls (18), wobei die ersten Daten Daten in Bezug auf das Fass (12) sind, sei es das Fass an sich oder der Inhalt des Fasses,
- Sammeln von zweiten Daten durch das Benutzerterminal, das in der zweiten Betriebsart betrieben wird, wobei die zweiten Daten Daten in Bezug auf den Fassbestand (12) sind, und
- Übertragen der Daten an die Datenverwaltungsplattform, der Übertragungsschritt umfassend das Übertragen der zweiten Daten durch das Benutzerterminal, das in der ersten Betriebsart betrieben wird, an die Datenverwaltungsplattform.

2. - Verfahren nach Anspruch 1, wobei das Verfolgungsgerät mindestens einen Sensor (16) umfasst, der geeignet ist, um eine Messung in Bezug auf das Fass (12) durchzuführen, wobei mindestens Daten unter den ersten Daten und den zweiten Daten eine von einem Sensor (16) stammende Messung sind.

3. - Verfahren nach Anspruch 1 oder 2, wobei das Verfahren einen Schritt eines Implementierens einer statistischen Analyse über die übertragenen Daten umfasst, wobei der Analyseschritt von der Datenverwaltungsplattform implementiert wird.

4. - Verfahren nach einem der Ansprüche 1 bis 3, wobei in dem Sammelschritt mindestens zweite Daten durch Lesen der ersten Daten erlangt wird.

5. - Verfahren nach einem der Ansprüche 1 bis 4, wobei in dem Sammelschritt mindestens zweite Daten von den ersten Daten verschieden sind.

6. - Verfahren nach einem der Ansprüche 1 bis 5, wobei die zweiten Daten die ersten Daten und zusätzliche Daten umfassen.

7. - Verfahren nach einem der Ansprüche 1 bis 6, wobei das Verfahren ferner einen Schritt zur Bestimmung des Fasses (12) umfasst, dessen Inhalt verkostet werden soll, umfassend das Berechnen, für jedes Fass (12), einer Punktzahl für die Verkostung des Inhalts des jeweiligen Fasses (12) abhängig von den übertragenen Daten umfasst.

8. - Verfahren nach einem der Ansprüche 1 bis 7, wobei das Verfahren ferner einen Schritt eines Vergleichens der übertragenen Daten mit Referenzdaten und einen Schritt des Warnens umfasst, wenn übertragene Daten fehlen oder übertragene Daten zu weit von den Referenzdaten entfernt sind.

9. - Verfahren nach einem der Ansprüche 1 bis 8, wobei mindestens Daten unter den ersten Daten und den zweiten Daten Daten sind, die sich auf den Ausbau des Inhalts eines Fasses (12), die Vinifizierung des Inhalts eines Fasses (12) oder die Herstellung des Inhalts eines Fasses (12) bezieht, beispielsweise Daten in Bezug auf das Schwefeln, das Ausschwefeln, das Beifüllen oder das Schönen des Inhalts eines Fasses (12).

10. - Verfahren nach einem der Ansprüche 1 bis 9, wobei mindestens ein Fass (12) eine Wand umfasst, die eine Innenseite und eine Außenseite aufweist, wobei die Wand ein Innenvolumen des Fasses (12) zwischen der Innenseite und der Außenseite definiert, wobei sich ein erstes elektronisches Modul (18) in dem Innenvolumen zwischen der Innenseite (21) und der Außenseite (22) des Fasses (12) befindet und ein zweites elektronisches Modul (18) an der Außenseite (21) des Fasses (12) angebracht ist.

11. - Verfahren nach einem der Ansprüche 1 bis 10, wobei mindestens Daten unter den ersten Daten und den zweiten Daten eine Messung sind, die an dem Fass (12) oder an dem Inhalt des Fasses (12) durchgeführt wird, insbesondere eine Messung in Bezug auf den Druck, die Temperatur oder die Sauerstoffkonzentration des Inhalts des Fasses (12).

12. - Verfahren nach einem der Ansprüche 1 bis 11, wobei das Benutzerterminal in dem Sammelschritt Daten liest, wobei die Daten ausgewählt sind aus der Gruppe, bestehend aus Daten von Strichcodes, Datamatrix^{®}-Codes, QR-Codes, Stempeln oder Gravuren und Daten über Elemente, die für die Herstellung des Inhalts des Fasses (12) erforderlich sind, insbesondere Gas, Protein oder landwirtschaftliche Betriebsmittel.

13. - Verfahren nach einem der Ansprüche 1 bis 12, wobei mindestens Daten unter den ersten Daten und den zweiten Daten Daten in Bezug auf die Chargennummer des Inhalts eines Fasses (12) sind, das Verfahren ferner umfassend einen Schritt zur Bestimmung von Fässern (12), die einen Inhalt mit derselben Chargennummer umfassen.

14. - Verfolgungsgerät (10) eines Fassbestands (12), das Verfolgungsgerät (10) umfassend:
- für jedes Fass (12) mindestens ein elektronisches Modul (18), das für das jeweilige Fass (12) spezifisch ist, das elektronische Modul (18) umfassend einen Speicher, der geeignet ist, um erste Daten zu speichern, wobei die ersten Daten Daten sind, die sich auf das Fass (12) beziehen, sei es das Fass an sich oder der Inhalt des Fasses, und
- ein Benutzerterminal, wobei das Benutzerterminal ein mobiles Terminal ist, das geeignet ist, um in einem ersten Betriebsmodus und einem zweiten Betriebsmodus betrieben zu werden, wobei das Benutzerterminal geeignet ist, um in dem ersten Betriebsmodus mit einer Datenverwaltungsplattform zu kommunizieren und in dem zweiten Betriebsmodus nicht mit der Datenverwaltungsplattform zu kommunizieren, wobei das Benutzerterminal ferner mit mindestens einem drahtlosen Kommunikationslesegerät versehen ist, das in beiden Betriebsmodi betrieben werden kann, wobei das Benutzerterminal geeignet ist, um in dem zweiten Betriebsmodus zweite Daten zu sammeln, wobei die zweiten Daten Daten sind, die sich auf den Fassbestand (12) beziehen, und die zweiten Daten durch das Benutzerterminal, das in dem ersten Betriebsmodus betrieben wird, an die Datenverwaltungsplattform zu übertragen.

15. Verfolgungsgerät (10) eines Bestands an Fässern (12) nach Anspruch 14, umfassend mindestens einen Sensor (16), der geeignet ist, um eine Messung in Bezug auf das Fass (12) durchzuführen, wobei mindestens Daten unter den ersten Daten und den zweiten Daten eine von einem Sensor (16) stammende Messung sind.

## Claims

1. A method for monitoring a collection of barrels (12) by an apparatus for monitoring a collection of barrels (12), the monitoring apparatus (10) comprising:
- for each barrel (12), at least one electronic module (18), the electronic module (18) being specific to the considered barrel (12) and comprising a memory (48) capable of storing data, and
- a user terminal, the user terminal being a mobile terminal capable of operating according to a first operating mode and a second operating mode, the user terminal being able to communicate with a data management platform in the first operating mode and not communicating with the data management platform in the second operating mode, the user terminal further being provided with at least one wireless communication reader operating in both operating modes,
the method including a step of:
- for each barrel, recording first data in the associated electronic module (18), the first data being data relative to the barrel (12), be it the barrel itself or its content,
- collecting second data by the user terminal operating in a second operating mode, the second data being data relative to the collection of barrels (12), and
- transmitting data to the data management platform, the transmission step including transmitting second data by the user terminal operating in the first operating mode to the data management platform.

2. The method according to claim 1, wherein the monitoring apparatus comprises at least one sensor (16) able to perform a measurement relative to the barrel (12), at least one datum from among the first data and the second data being a measurement coming from a sensor (16).

3. The method according to claim 1 or 2, wherein the method includes a step for carrying out a statistical analysis on the transmitted data, the analysis step being carried out by the data management platform.

4. The method according to any one of claims 1 to 3, wherein in the collection step, at least a second datum is obtained by reading one of the first data.

5. The method according to any one of claims 1 to 4, wherein in the collection step, at least a second datum is separate from the first data.

6. The method according to any one of claims 1 to 5, wherein the second data comprise the first data and additional data.

7. The method according to any one of claims 1 to 6, wherein the method further includes a step for determining the barrel (12) whose content is to be tasted including the calculation, for each barrel (12), of a tasting score of the content of the considered barrel (12) as a function of the transmitted data.

8. The method according to any one of claims 1 to 7, wherein the method further includes a step for comparing transmitted data to reference data and an alert step when transmitted data are missing or when transmitted data are too far from reference data.

9. The method according to any one of claims 1 to 8, wherein at least one datum from among the first data and the second data is a datum relative to the ageing of the content of a barrel (12), the winemaking process of the content of a barrel (12), or the development of the content of a barrel (12), for example a datum relative to the sulfiting, the packing, the ullage or the clarifying of the content of a barrel (12).

10. The method according to any one of claims 1 to 9, wherein at least one barrel (12) comprises a wall having an inner face and an outer face, the wall defining an inner volume of said barrel (12) comprised between the inner face and the outer face, a first electronic module (18) being located in the inner volume comprised between the inner face (21) and the outer face (22) of the barrel (12) and a second electronic module (18) being affixed on the outer face (21) of the barrel (12).

11. The method according to any one of claims 1 to 10, wherein at least one datum from among the first data and the second data is a measurement done on the barrel (12) or on the content of the barrel (12), in particular a measurement relative to the pressure, the temperature or the dioxygen concentration of the content of the barrel (12).

12. The method according to any one of claims 1 to 11, wherein, during the collection step, the user terminal reads data coming from another marker, the data being chosen in the group consisting of a bar code reader, a Datamatrix^{®} code reader or a QR code reader, stamps or etchings, and data relative to necessary elements to develop the content of the barrel (12), in particular gas, proteins or inputs.

13. The method according to any one of claims 1 to 12, wherein at least one datum from among the first data and the second data is a datum relative to the lot number of the content of a barrel (12), the method furthermore including a step for determining barrels (12) comprising a content with the same lot number.

14. An apparatus (10) for monitoring a collection of barrels (12), the monitoring apparatus (10) comprising:
- for each barrel (12), at least one electronic module (18) being specific to the considered barrel (12), the electronic module (18) comprising a memory capable of storing first data, the first data being data relative to the barrel (12), be it the barrel itself or its content, and
- a user terminal, the user terminal being a mobile terminal capable of operating according to a first operating mode and a second operating mode, the user terminal being able to communicate with a data management platform in the first operating mode and not communicating with the data management platform in the second operating mode, the user terminal further being provided with at least one wireless communication reader operating in both operating modes, the user terminal being able to collect second data in the second operating mode, the second data being data relative to the collection of barrels (12), and to send the second data by the user terminal operating in the first operating mode to the data management platform.

15. The apparatus (10) for monitoring a collection of barrels (12) according to claim 14, comprising at least one sensor (16) able to perform a measurement relative to the barrel (12), at least one datum from among the first data and the second data being a measurement coming from a sensor (16).
